# EUROPEAN PATENT APPLICATION

(11) **EP 4 660 443 A1**
(43) Date of publication of application: **10.12.2025**
(21) Application number: 25164604.8
(22) Date of filing: 19.03.2025
(51) Int. Cl.: F02D 19/02, G01N 21/3504, F02D 41/00, F02D 41/22, F02D 41/14, F02D 41/28

(54) **VEHICLE SENSING AND CONTROL ASSEMBLY, VEHICLE, FUELING EQUIPMENT AND METHOD FOR OPERATING THE SAME**

(30) Priority: 03.06.2024 GB 202407830
(71) Applicant: Agco do Brasil Solucoes Agricolas LTDA, Sao Paulo, 14030-680 (BR)
(72) Inventor: da Costa Graça, Ricardo André, 08740-300 Mogi das Cruzes (BR)
(74) Representative: AGCO Intellectual Property Department

(57) **Abstract**

Provided is a vehicle sensing and control assembly compatible with a vehicle (10), which vehicle has a combustion engine (12) configured to enable biogas to be used as fuel for the combustion engine. The vehicle sensing and control assembly comprises a sensing system, which sensing system comprises at least one infrared sensor (34). The sensing system is configured to determine, using data from the at least one infrared sensor, a measure of a concentration of at least one non-hydrocarbon impurity in the biogas. The vehicle sensing and control assembly further comprises a control system (46) configured to control a user communication system (20), based on said measure, to communicate information relevant to the at least one non-hydrocarbon impurity in the biogas to a user of the vehicle; and/or to generate, based on said measure, one or more control signals for adjusting a configuration of the combustion engine. The user communication system may, for example, be included in the vehicle. Also provided is a vehicle comprising such a vehicle sensing and control assembly. Additionally provided is a fueling assembly comprising fueling equipment for delivering biogas into a vehicle storage tank assembly of a vehicle, and the vehicle sensing and control assembly (and/or the vehicle comprising the vehicle sensing and control assembly). Further provided is a method and a related computer program for operating a vehicle having a combustion engine configured to enable biogas to be used as fuel for the combustion engine.

## Description

### FIELD

Embodiments of the present disclosure relate generally to a vehicle sensing and control assembly, and a vehicle comprising such a vehicle sensing and control assembly. Embodiments also concern a fueling assembly comprising fueling equipment for delivering biogas into a vehicle storage tank assembly of a vehicle, and the vehicle sensing and control assembly or the vehicle comprising the vehicle sensing and control assembly. Embodiments further concern a method and related computer program for operating a vehicle having a combustion engine configured to enable biogas to be used as fuel for the combustion engine.

### BACKGROUND

Vehicles can have combustion engines that are able to use biogas as fuel. Biogas contains methane as a major component. Use of biogas as the fuel for the combustion engine may be desirable for sustainability reasons over, for example, liquified petroleum gas (LPG).

Biogas can also be preferred for cost reasons when the user of the vehicle has cheaper access to biogas, e.g. via his/her own biogas production equipment, than to LPG. The latter may apply, for example, to farms comprising biogas production equipment and vehicles, in particular agricultural vehicles, whose combustion engines are able to use the biogas produced by such biogas production equipment as fuel.

However, the composition of the biogas can be variable. In particular, the composition of the biogas, and especially the concentration of non-hydrocarbon impurity(ies) in the biogas can vary, depending on, for example, the type of feedstock and/or the process used to produce the biogas.

### BRIEF SUMMARY

Variability of composition of biogas, and in particular variability of concentration of non-hydrocarbon impurity(ies) in the biogas can risk inefficient running of and/or damage to a vehicle's combustion engine, especially under conditions of use when the vehicle is an agricultural vehicle, such as a tractor.

According to examples in accordance with an aspect of the present disclosure, there is provided a vehicle sensing and control assembly for a vehicle, which vehicle has a combustion engine configured to enable biogas to be used as fuel for the combustion engine, the vehicle sensing and control assembly comprising: a sensing system comprising at least one infrared sensor, the sensing system being configured to determine, using data from the at least one infrared sensor, a measure of a concentration of at least one non-hydrocarbon impurity in the biogas; and a control system configured to: control a user communication system, based on said measure, to communicate information relevant to the at least one non-hydrocarbon impurity in the biogas to a user of the vehicle; and/or generate, based on said measure, one or more control signals for adjusting a configuration of the combustion engine.

By providing the user of the vehicle, via the user communication system, with the information relevant to the at least one non-hydrocarbon impurity(ies) in the biogas, the user may, for example, be able to take remedial action should the information be indicative of elevated non-hydrocarbon impurity(ies) concentration(s) in the biogas. Alternatively or additionally, adjusting the combustion engine's configuration based on the measure of the concentration of the non-hydrocarbon impurity(ies) in the biogas can assist to minimize risk of inefficient running of and/or damage to the combustion engine being caused by elevated non-hydrocarbon impurity(ies) concentration(s) in the biogas.

In some embodiments, one or more of the at least one infrared sensor is/are for arranging upstream of the combustion engine to analyze biogas to be, and/or being, supplied to the combustion engine. This can provide a straightforwardly implementable and direct way of determining the concentration of the non-hydrocarbon impurity(ies) in the biogas. For example, the one or more of the infrared sensor(s) may be arranged to analyze gas in tubing that carries the biogas to the combustion engine.

In some embodiments, the vehicle comprises a vehicle storage tank assembly for storing biogas to be supplied to the combustion engine, with the at least one infrared sensor comprising at least one delivery system infrared sensor arranged to analyze biogas between the vehicle storage tank assembly and the combustion engine.

This can provide a beneficial arrangement of the infrared sensor(s), for example in embodiments in which the sensing system is an integral part of the vehicle, and/or the measure of the concentration of the non-hydrocarbon impurity(ies) is used to adjust the configuration of the combustion engine while the combustion engine is running.

As an alternative or in addition to the delivery system infrared sensor(s), the infrared sensor(s) may comprise at least one fueling infrared sensor arranged to analyze biogas being delivered into the vehicle storage tank assembly. In such embodiments, the user may derive particular benefit from the information relevant to the at least one non-hydrocarbon impurity(ies) in the biogas, since the user may, for example, be able to refrain from or stop fueling should the information be indicative of an unacceptably high non-hydrocarbon impurity(ies) concentration in the biogas to be or being delivered into the vehicle storage tank assembly.

Alternatively or additionally, the configuration of the combustion engine can be adjusted based on the measure of the concentration of the non-hydrocarbon impurity(ies) in the biogas so that, following fueling, the thus adjusted configuration of the combustion engine takes account of the concentration of the non-hydrocarbon impurity(ies) in the biogas that has been delivered into the vehicle storage tank assembly.

In some embodiments, the control system is configured to generate the control signal(s) for adjusting the configuration of the combustion engine based on the measure reaching or exceeding a given threshold.

In such embodiments, the control signal(s) may, for example, adjust the configuration of the combustion engine based on the measure reaching or exceeding the given threshold to limit power output of the combustion engine. This can assist to protect the combustion engine from damage due to elevated non-hydrocarbon impurity(ies) concentration(s) in the biogas.

In some embodiments, the control system is configured to cause, based on the measure reaching or exceeding the given threshold, the vehicle to be operated in a limp mode, which limp mode comprises a maximum number of revolutions per minute of the combustion engine being limited compared to when the vehicle is not being operated in the limp mode.

Alternatively or additionally, the control system may be configured to control the user communication system to issue a notification or warning to the user, e.g. via an audible, visual and/or haptic alert provided via the user communication system, based on the measure reaching or exceeding a given limit.

In embodiments in which the control signal(s) adjust the configuration of the combustion engine based on the measure reaching or exceeding the given threshold to limit power output of the combustion engine, the control system may be configured to control the user communication system to notify the user that the power output of the combustion engine being limited is due, at least in part, to excessive concentration of the at least one non-hydrocarbon impurity in the biogas. This may help the user to understand why the power output of the combustion engine is limited, and can prompt the user to take suitable remedial action, such as replacing the biogas in the vehicle storage tank assembly.

In embodiments in which CO₂ is one of the at least one non-hydrocarbon impurity, the given threshold or the given limit for CO₂ may be equivalent to a CO₂ concentration threshold in the range of 2.5 to 4.5 mol%, e.g. as determined via ASTM D 1945 (2019).

For example, the given threshold or the given limit for CO₂ may be equivalent to a CO₂ concentration threshold of about 3.0 mol%, e.g. as determined via ASTM D 1945 (2019).

Alternatively or additionally, in embodiments in which H₂S is one of the at least one non-hydrocarbon impurity, the given threshold or the given limit for H₂S may be equivalent to a H₂S concentration threshold in the range of 5 to 20 mg/m³, e.g. as determined via ASTM D 6228-11.

For example, the given threshold or the given limit for H₂S may be equivalent to a H₂S concentration threshold of about 10 mg/m³, e.g. as determined via ASTM D 6228-11.

Alternatively or additionally, in embodiments in which siloxane(s) is one of the at least one non-hydrocarbon impurity, the given threshold or the given limit for siloxane(s) may be equivalent to a siloxane(s) concentration threshold in the range of 0.10 to 0.50 mg Si/m³, e.g. as determined via ABNT NBR 16560 (01/2017) or ABNT NBR 16561 (2017-01-09).

For example, the given threshold or the given limit for siloxane(s) may be equivalent to a siloxane(s) concentration threshold of about 0.30 mg Si/m³, e.g. as determined via ABNT NBR 16560 (01/2017) or ABNT NBR 16561 (2017-01-09).

Alternatively or additionally, in embodiments in which chlorinated compound(s) is one of the at least one non-hydrocarbon impurity, the given threshold or the given limit for chlorinated compound(s) may be equivalent to a chlorinated compound(s) concentration threshold in the range of 2 to 10 mg Cl/m³, e.g. as determined via ABNT NBR 16562 (2017-01-09).

For example, the given threshold or the given limit for chlorinated compound(s) may be equivalent to a chlorinated compound(s) concentration threshold of about 5 mg Cl/m³, e.g. as determined via ABNT NBR 16562 (2017-01-09).

Alternatively or additionally, in embodiments in which fluorinated compound(s) is one of the at least one non-hydrocarbon impurity, the given threshold or the given limit for fluorinated compound(s) may be equivalent to a fluorinated compound(s) concentration threshold in the range of 2 to 10 mg F/m³, e.g. as determined via ABNT NBR 16562 (2017-01-09).

For example, the given threshold or the given limit for fluorinated compound(s) may be equivalent to a fluorinated compound(s) concentration threshold of about 5 mg F/m³, e.g. as determined via ABNT NBR 16562 (2017-01-09).

In some embodiments, the at least one non-hydrocarbon impurity comprises one or more selected from H₂O, CO₂, H₂S, siloxane(s), NH₃, nitrogen oxides, N₂, and halogen-comprising species. The concentration of such impurities may represent useful information to take into account in order to minimize risk of inefficient running of and/or damage to the combustion engine.

The sensing system may be configured to spectroscopically determine, e.g. using infrared spectroscopy and/or Raman spectroscopy, the measure of the concentration of the at least one non-hydrocarbon impurity in the biogas.

Alternatively or additionally, the at least one infrared sensor may be configured to analyze the biogas using near infrared radiation, having a wavelength between 785 nm and 2500 nm, and/or mid infrared radiation, having a wavelength between 2501 nm to 15000 nm. Such near infrared and mid infrared wavelengths have been found to be particularly suitable for analyzing non-hydrocarbon impurity(ies) present in biogas, such as H₂O, CO₂, H₂S, siloxane(s), NH₃, nitrogen oxides, N₂, and/or halogen-comprising species.

According to another aspect there is provided a vehicle comprising: a combustion engine configured to enable biogas to be used as fuel for the combustion engine; and the vehicle sensing and control assembly according to any of the embodiments described herein.

The user communication system can, for example, be included in the vehicle, e.g. in a driver human machine interface, driver HMI, of the vehicle.

Alternatively or additionally, one or more of the at least one infrared sensor may be arranged upstream of the combustion engine to analyze biogas to be, and/or being, supplied to the combustion engine.

In some embodiments, the vehicle is an agricultural vehicle. For example, the vehicle may be an agricultural vehicle in the form of a tractor or a crop sprayer.

When the vehicle is an agricultural vehicle, and in particular when the vehicle is in the form of a tractor or a crop sprayer, the above-mentioned risks associated with non-hydrocarbon impurities present in the biogas can be especially problematic. This is due to such agricultural vehicles tending to operate for prolonged periods, e.g. for several hours every day, at maximum power, often in hot and dusty environments, at relatively low speeds (hence with little airflow being provided to assist cooling of the combustion engine).

Such conditions tend to be completely different from those encountered by combustion engines included in passenger cars and commercial vehicles, such as light goods vehicles and heavy goods vehicles. This can mean that the presence of siloxane(s) and other non-hydrocarbon impurities can significantly reduce the lifetime of the combustion engine included in an agricultural vehicle, as well as potentially requiring excessive quantities of engine oil to lubricate the combustion engine.

The vehicle sensing and control assembly according to the present disclosure may correspondingly be particularly beneficial in embodiments in which the vehicle is an agricultural vehicle, e.g. a tractor or a crop sprayer.

According to still another aspect there is provided a fueling assembly comprising fueling equipment for delivering biogas into a vehicle storage tank assembly of a vehicle; and the vehicle sensing and control assembly according to any of the embodiments described herein, or the vehicle according to any of the embodiments described herein.

The user communication system can, for example, be included in the fueling equipment and/or in the vehicle.

According to yet another aspect there is provided a method of operating a vehicle that comprises a combustion engine configured to enable biogas to be used as fuel for the combustion engine, the method comprising: determining, using a sensing system comprising at least one infrared sensor, a measure of a concentration of at least one non-hydrocarbon impurity in the biogas using data from the at least one infrared sensor; and one or both of the following: controlling a user communication system, based on said measure, to communicate information relevant to the at least one non-hydrocarbon impurity in the biogas to a user of the vehicle; and generating, based on said measure, one or more control signals for adjusting a configuration of the combustion engine.

The method may be implemented using, for example, the control system of the vehicle sensing and control assembly according to any of the embodiments described herein.

According to a further aspect there is provided a computer program comprising computer program code which, when executed on a computing device having a control system, causes the control system to implement the method according to any of the embodiments described herein.

One or more non-transitory computer readable media may be provided, which non-transitory computer readable media have a computer program stored thereon, and the computer program comprises computer program code which is configured, when the computer program is run on a control system, to cause the control system to implement the method according to any of the embodiments described herein.

It is generally noted that embodiments described herein in relation to the method and computer program may be applicable to the vehicle sensing and control assembly, the vehicle and/or the fueling assembly, and embodiments described herein in relation to the vehicle sensing and control assembly, the vehicle, and/or the fueling assembly may be applicable to the method and computer program.

### BRIEF DESCRIPTION OF THE DRAWINGS

One or more embodiments will now be described, by way of example only, with reference to the accompanying drawings, in which:
FIG. 1 provides a view showing various features of a vehicle according to an example;
FIG. 2A provides a schematic view of a vehicle according to another example;
FIG. 2B reproduces a block diagram included in the schematic view provided in FIG. 2A;
FIG. 3A provides a schematic view of fueling equipment and a vehicle according to yet another example;
FIG. 3B reproduces a block diagram included in the schematic view provided in FIG. 3A;
FIG. 4 provides a block diagram of an infrared sensor according to an example;
FIG. 5A provides a Fourier transform infrared, FT-IR, spectrum, absorbance vs wavenumber, of methane;
FIG. 5B provides a Fourier transform infrared, FT-IR, spectrum, transmittance vs wavenumber, of methane; and
FIG. 6 provides a flow chart of a method according to an example.

### DETAILED DESCRIPTION

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a vehicle sensing and control assembly for a vehicle, which vehicle has a combustion engine configured to enable biogas to be used as fuel for the combustion engine. The vehicle sensing and control assembly comprises a sensing system, which sensing system comprises at least one infrared sensor. The sensing system is configured to determine, using data from the at least one infrared sensor, a measure of a concentration of at least one non-hydrocarbon impurity in the biogas. The vehicle sensing and control assembly further comprises a control system configured to control a user communication system, based on said measure, to communicate information relevant to the at least one non-hydrocarbon impurity in the biogas to a user of the vehicle; and/or to generate, based on said measure, one or more control signals for adjusting a configuration of the combustion engine. The user communication system may, for example, be included in the vehicle.

Also provided is a vehicle comprising such a vehicle sensing and control assembly.

Additionally provided is a fueling assembly comprising fueling equipment for delivering biogas into a vehicle storage tank assembly of a vehicle, and the vehicle sensing and control assembly (and/or the vehicle comprising the vehicle sensing and control assembly).

Further provided is a method and a related computer program for operating a vehicle having a combustion engine configured to enable biogas to be used as fuel for the combustion engine.

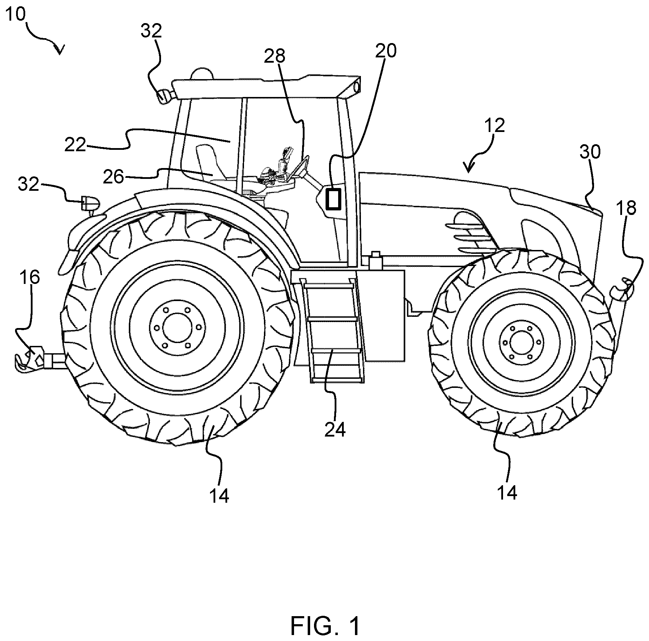

FIG. 1 depicts a vehicle 10 according to an example. In some embodiments, such as shown in FIG. 1, the vehicle 10 is an agricultural vehicle, such as a tractor (as illustrated in FIG. 1), a crop sprayer, a harvester or a seeder.

The type of vehicle 10 is not particularly limited, although certain principles of the present disclosure may be particularly beneficial in embodiments in which the vehicle 10 is an agricultural vehicle, such as a tractor or crop sprayer, as explained in more detail herein below.

Irrespective of the vehicle type, the vehicle 10 has a combustion engine 12, e.g. an internal combustion engine 12, configured to enable biogas to be used as fuel for the combustion engine 12.

The term "biogas" as used herein may refer to a methane-comprising fuel produced from organic matter. For example, the biogas may be produced by anerobic digestion of organic matter, such as food and/or animal waste, by microorganisms.

The hydrocarbon content, and in particular methane content, of the biogas may enable it to be used as fuel for the combustion engine 12.

A minimum concentration of methane in the biogas may, for example, be 90 mol% as determined by ASTM D 1945 (2019).

In some embodiments, the configuration of the combustion engine 12 that enables biogas to be used as fuel for the combustion engine 12 also enables liquified petroleum gas, LPG, to be used as fuel for the combustion engine 12. It is nonetheless noted that use of biogas as the fuel for the combustion engine 12 may be desirable for sustainability reasons and/or cost reduction reasons when the user of the vehicle 10 has cheaper access to biogas, e.g. via his/her own biogas production equipment, than to LPG.

A primary purpose of the combustion engine 12 may be to drive the vehicle's 10 wheels 14 to propel the vehicle 10. In some embodiments, the combustion engine 12 may be arranged to power equipment, e.g. agricultural equipment, in addition to being configured to drive the wheels 14.

Using the combustion engine 12 to power such equipment, e.g. agricultural equipment, can be implemented in any suitable manner, for example via a power take off shaft.

It is noted that the vehicle 10 can include rear coupling device(s) 16 and/or front coupling device(s) 18 for coupling the vehicle 10 to the equipment, e.g. agricultural equipment, at the rear and at the front of the vehicle 10, respectively.

With continued reference to FIG. 1, the vehicle 10, e.g. tractor, can include a user communication system 20 for providing information to the user of the vehicle 10. When included in the vehicle 10, the user communication system 20 can be regarded, for example, as a driver human machine interface, driver HMI.

As explained in more detail herein below, the user communication system 20 (irrespective of whether or not the user communication system 20 is included in the vehicle 10) can be controlled to communicate information to the user relating to the biogas being or to be used as fuel for the combustion engine 12.

In some embodiments, at least part of the user communication system 20 is arranged to provide the information to the user while the user is in the cabin or cab 22 of the vehicle 10.

It is noted that in embodiments in which the cabin or cab 22 is at an elevated position above the ground, e.g. in the case of the vehicle 10 being a tractor, the vehicle 10 can include step(s), a ladder 24 or the like for assisting the user to gain access to the cabin or cab 22 from the ground.

It is further noted that the cabin or cab 22 of the vehicle 10 may be where the user drives, and controls equipment included in, the vehicle 10. To this end, the cabin or cab 22 can contain seat(s) 26, a steering wheel 28 for steering the vehicle 10, user interface(s), e.g. button(s), dial(s), touchscreen(s), etc., for controlling function(s) of the vehicle 10 and/or the above-mentioned equipment, e.g. as well as at least part of the user communication system 20.

The user interface(s) can control various function(s) of the vehicle 10, such as controlling the vehicle's 10 exterior lights, e.g. headlight(s) 30 and taillight(s) 32. The user interface(s) can, more generally, be configured for receiving operator inputs relevant to operation of the vehicle 10.

The composition of the biogas used as fuel for the combustion engine 12 can be variable. In particular, the composition of the biogas, and especially the concentration of non-hydrocarbon impurity(ies) in the biogas can vary, depending on, for example, the type of feedstock and/or the process used to produce the biogas.

Elevated concentrations of such non-hydrocarbon impurities, such as H₂O, CO₂, H₂S, siloxane(s), NH₃, nitrogen oxides, N₂, and halogen-comprising species, can reduce efficiency of the combustion engine 12 and/or can risk damaging the combustion engine 12.

Siloxane(s), in particular, can be harmful to the combustion engine 12, since such silicon-comprising compounds can cause abrasion to components of the combustion engine 12.

It is also noted that when the vehicle 10 is an agricultural vehicle 10, and in particular when the vehicle 10 is in the form of a tractor, the above-mentioned risks associated with non-hydrocarbon impurities present in the biogas can be especially problematic. This is due to such agricultural vehicles tending to operate for prolonged periods, e.g. for several hours every day, at maximum power, often in hot and dusty environments, at relatively low speeds (hence with little airflow being provided to assist cooling of the combustion engine 12).

Such conditions tend to be completely different from those encountered by combustion engines 12 included in passenger cars and commercial vehicles 10, such as light goods vehicles 10 and heavy goods vehicles 10. This can mean that the presence of siloxane(s) and other non-hydrocarbon impurities can significantly reduce the lifetime of the combustion engine 12 included in an agricultural vehicle 10, as well as potentially requiring excessive quantities of engine oil to lubricate the combustion engine 12.

The presence of water vapor in the biogas can also risk reducing performance of the fuel and accumulation of water in colder parts of the combustion engine 12, such as in an oil reservoir, tubes, cylinders, etc. In severe cases, water derived from the biogas may cause deterioration of hydraulic seals, and/or may promote formation of acidic solutions that can cause/accelerate corrosion, as well as other issues.

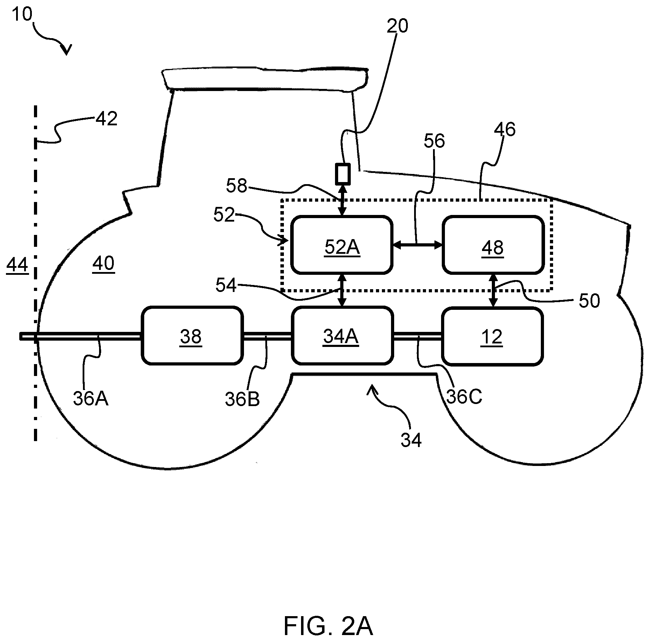

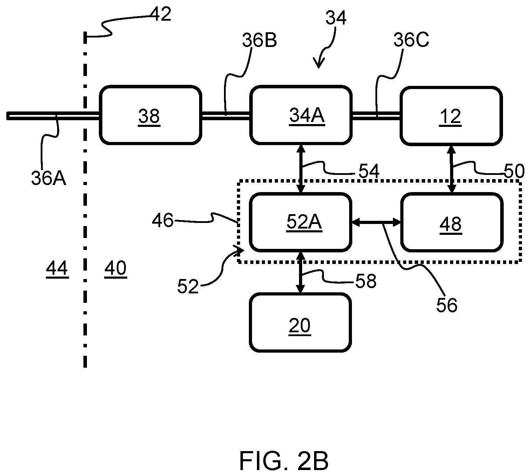

Referring now to FIGs. 2A and 2B, the vehicle sensing and control assembly according to the present disclosure correspondingly comprises a sensing system that includes at least one infrared sensor 34. The sensing system is configured to determine, using data from the at least one infrared sensor 34, a measure of a concentration of at least one non-hydrocarbon impurity in the biogas.

The sensing system may spectroscopically determine, e.g. using infrared spectroscopy and/or Raman spectroscopy, the measure of the concentration of the at least one non-hydrocarbon impurity in the biogas.

The manner in which such a spectroscopic determination is made is not particularly limited, and various ways of implementing such a spectroscopic determination will be explained with reference to non-limiting examples provided herein below.

The infrared sensor(s) 34 can be arranged in any suitable manner provided that the infrared sensor(s) 34 is/are able to provide data from which the measure of the concentration of the non-hydrocarbon impurity(ies) is determinable. In some embodiments, such as schematically shown in FIGs. 2A and 2B, one or more of the infrared sensor(s) 34 is/are arranged upstream of the combustion engine 12 to analyze biogas to be, and/or being, supplied to the combustion engine 12. This can provide a straightforwardly implementable and direct way of determining the concentration of the non-hydrocarbon impurity(ies) in the biogas.

For example, the one or more of the infrared sensor(s) 34 may be arranged to analyze gas in tubing 36A, 36B, 36C that carries the biogas to the combustion engine 12.

A vehicle storage tank assembly 38 included in the vehicle 10 for storing biogas to be supplied to the combustion engine 12 may include one or more storage tanks in which the biogas is storable. In such embodiments, the vehicle storage tank assembly 38, e.g. the storage tank(s) thereof, may be configured to store the biogas in liquified form.

In some embodiments, and with continued reference to FIGs. 2A and 2B, the at least one infrared sensor 34 comprises at least one delivery system infrared sensor 34A arranged to analyze biogas between the vehicle storage tank assembly 38 and the combustion engine 12, for example between a most downstream storage tank and the combustion engine 12 when a plurality of storage tanks are included in the vehicle storage tank assembly 38.

This can provide a beneficial arrangement of the infrared sensor(s) 34, particularly in embodiments in which the sensing system is an integral part of the vehicle 12, and/or the measure of the concentration of the non-hydrocarbon impurity(ies) is used to adjust a configuration of the combustion engine 12 while the combustion engine 12 is running.

It is noted that adjusting the configuration of the combustion engine 12 may comprise adjusting a calibration of, such as one or more parameters relevant to combustion in, the combustion engine 12, e.g. while the combustion engine 12 is running.

For example, when the vehicle 10 is started, in other words on ignition, the sensing assembly comprising the at least one delivery system infrared sensor 34A may be activated to check the biogas composition of the biogas being delivered from the vehicle storage tank assembly 38. Such a check may include estimation of a minimum quantity of methane, as well as the measure of the concentration of non-hydrocarbon impurity(ies), e.g. H₂O, CO₂, H₂S, siloxane(s), NH₃, nitrogen oxides, N₂, and/or halogen-comprising species, in the biogas.

In such embodiments, and still referring to FIGs. 2A and 2B, the delivery system infrared sensor(s) 34A may be arranged to receive the biogas from tubing 36B arranged to carry the biogas downstream from the vehicle storage tank assembly 38, e.g. from the most downstream storage tank of the vehicle storage tank assembly 38. Tubing 36C may carry the biogas from the delivery system infrared sensor(s) 34A downstream towards or to the combustion engine 12.

It is also noted that tubing 36A may carry the biogas from a fuel inlet of the vehicle 10 to the vehicle storage tank assembly 38, e.g. from the fuel inlet to a most upstream storage tank of the vehicle storage tank assembly 38.

In some embodiments, the, e.g. each of the, delivery system infrared sensor(s) 34A is/are arranged on an inside 40 of the vehicle 10, for example on an inside 40 of a body of the vehicle 10.

The dotted line labelled by reference numeral 42 in FIGs. 2A and 2B is intended to delineate the inside 40 of the vehicle 10 from an outside 44 of the vehicle 10, for example an outside 44 of the body of the vehicle 10.

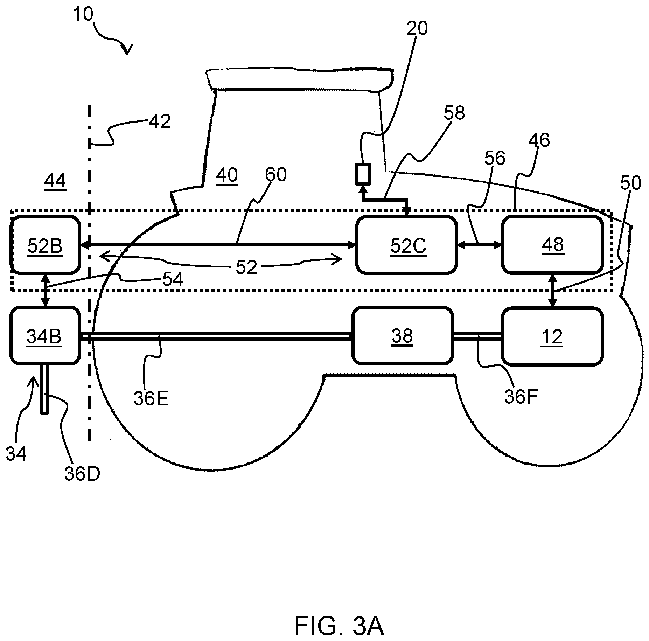

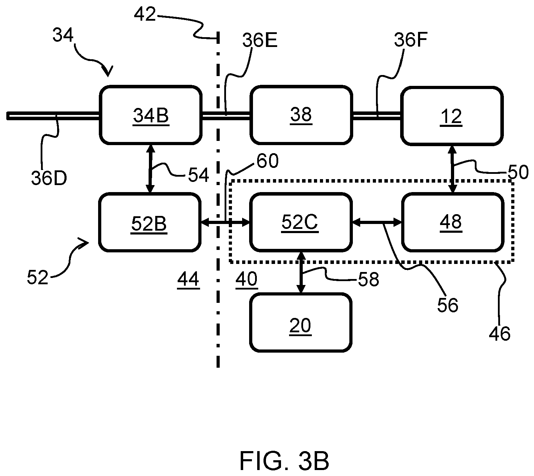

As an alternative or in addition to the delivery system infrared sensor(s) 34A, the infrared sensor(s) 34 can include, referring now to FIGs. 3A and 3B, at least one fueling infrared sensor 34B arranged to analyze biogas being delivered into the vehicle storage tank assembly 38. Thus, the biogas can be analyzed when fueling the vehicle 10 with biogas.

In such embodiments, the user may derive particular benefit from information relevant to the at least one non-hydrocarbon impurity(ies) in the biogas, since the user may, for example, be able to refrain from or stop fueling should the information be indicative of an unacceptably high non-hydrocarbon impurity(ies) concentration in the biogas to be or being delivered into the vehicle storage tank assembly 38. Alternatively or additionally, the configuration of the combustion engine 12 can be adjusted based on the measure of the concentration of the non-hydrocarbon impurity(ies) in the biogas so that, following fueling, the thus adjusted configuration of the combustion engine 12 takes account of the concentration of the non-hydrocarbon impurity(ies) in the biogas that has been delivered into the vehicle storage tank assembly 38.

In some embodiments, and still referring to FIGs. 3A and 3B, the fueling infrared sensor(s) 34B is/are arranged to receive the biogas from tubing 36D included in fueling equipment for fueling the vehicle 10.

Tubing 36E may carry the biogas from the fueling infrared sensor(s) 34B downstream towards or to the vehicle storage tank assembly 38, e.g. to a most upstream storage tank of the vehicle storage tank assembly 38.

Tubing 36F may carry the biogas from the vehicle storage tank assembly 38 downstream towards or to the combustion engine 12, e.g. from a most downstream storage tank of the vehicle storage tank assembly 38 towards or to the combustion engine 12.

In some embodiments, the, e.g. each of the, fueling infrared sensor(s) 34B is/are arranged on the outside 44 of the vehicle 10, for example outside a body of the vehicle 10.

Such an external arrangement of the fueling infrared sensor(s) 34B can be convenient considering the positioning of fueling equipment used for delivering the biogas into the vehicle storage tank assembly 38 on the outside 44 of the vehicle 10. Alternatively or additionally, such external arrangement of the fueling infrared sensor(s) 34B can facilitate retrofitting of the fueling infrared sensor(s) 34B to the vehicle 10, for example as part of a vehicle sensing and control assembly that is compatible with and fittable to the vehicle 10.

More generally, and referring to FIGs. 2A, 2B, 3A and 3B, a control system 46 is configured to generate one or more control signals for adjusting the configuration of the combustion engine 12 based on the measure of the concentration of the non-hydrocarbon impurity(ies) in the biogas, and/or to control the user communication system 20, based on said measure, to communicate information relevant to the non-hydrocarbon impurity(ies) in the biogas to the user, e.g. the driver, of the vehicle 10.

By providing the user of the vehicle 10, via the user communication system 20, with the information relevant to the at least one non-hydrocarbon impurity(ies) in the biogas, the user may, for example, be able to take remedial action should the information be indicative of elevated non-hydrocarbon impurity(ies) concentration(s) in the biogas. Alternatively or additionally, adjusting the combustion engine's 12 configuration, for example to derate or stop the combustion engine 12, based on the measure of the concentration of the non-hydrocarbon impurity(ies) in the biogas can assist to minimize risk of inefficient running of and/or damage to the combustion engine 12 being caused by elevated non-hydrocarbon impurity(ies) concentration(s) in the biogas.

It is noted that the term "derate" refers to reducing the power rating or power output of the combustion engine 12.

Derating the combustion engine 12 can be implemented in any suitable manner. In some embodiments, the derating comprises deactivating one or more cylinders of the combustion engine 12, e.g. by deactivating intake and exhaust valves of each of the cylinder(s) to be deactivated.

In some embodiments, the control system 46 is configured to generate the control signal(s) for adjusting the configuration of the combustion engine 12 based on the measure reaching or exceeding a given threshold.

In such embodiments, the control signal(s) may, for example, adjust the configuration of the combustion engine 12 based on the measure reaching or exceeding the given threshold to limit power output of the combustion engine 12. This can assist to protect the combustion engine 12 from damage due to elevated non-hydrocarbon impurity(ies) concentration(s) in the biogas.

In some embodiments, the control system 46 is configured to cause, based on the measure reaching or exceeding the given threshold, the vehicle 10 to be operated in a limp mode, which limp mode comprises a maximum number of revolutions per minute of the combustion engine 12 being limited compared to when the vehicle 10 is not being operated in the limp mode.

Alternatively or additionally, the control system 46 may be configured to control the user communication system 20 to issue a notification or warning to the user, e.g. via an audible, visual and/or haptic alert provided via the user communication system 20, based on the measure reaching or exceeding a given limit.

In embodiments in which the control signal(s) adjust the configuration of the combustion engine 12 based on the measure reaching or exceeding the given threshold to limit power output of the combustion engine 12, the control system 46 may be configured to control the user communication system 20 to notify the user that the power output of the combustion engine 12 being limited is due, at least in part, to excessive concentration of the at least one non-hydrocarbon impurity in the biogas. This may help the user to understand why the power output of the combustion engine 12 is limited, and can prompt the user to take suitable remedial action, such as replacing the biogas in the vehicle storage tank assembly 38.

The control system 46 can be implemented in any suitable manner. In some embodiments, the control system 46 comprises one or more processors, electronic input(s) and electronic output(s). The processor(s) may be operable to access memory(ies) also included in the control system 46 and execute instructions stored therein to implement the steps and functionality of the present disclosure described herein.

The control system 46 may be an on-board control system 46 of the vehicle 10. It is nonetheless noted that in some embodiments one or more components, e.g. processor(s) and/or memory(ies), included in the control system 46 is/are located remotely from the vehicle 10, for example in fueling equipment.

In some embodiments, such as shown in FIGs. 2A, 2B, 3A and 3B, the control system 46 is included, at least in part, in the vehicle's 10 engine electronic control unit, engine ECU, 48.

In embodiments in which the control system 46 controls the combustion engine 12 based on the measure of the concentration of the non-hydrocarbon impurity(ies) in the biogas, the combustion engine 12 may be thus controlled using the engine ECU 48.

It is noted that the double-headed arrow labelled by reference numeral 50 in FIGs. 2A, 2B, 3A and 3B denotes communication, e.g. a data link, between the control system 46, e.g. the engine ECU 48 thereof, and the combustion engine 12.

As an alternative or in addition to the control system 46 being at least partly included in the engine ECU 48, the sensing system and/or the control system 46 may include at least one sensor electronic control unit, sensor ECU, 52 configured to process the data received from the at least one infrared sensor 34, e.g. to determine the measure of the concentration of the non-hydrocarbon impurity(ies) in the biogas.

The double-headed arrow labelled by reference numeral 54 in FIGs. 2A, 2B, 3A and 3B denotes communication, e.g. a data link, between the at least one sensor ECU 52 and the at least one infrared sensor 34. For example, a controller area network, CAN, connection may be provided between the at least one sensor ECU 52 and the at least one infrared sensor 34.

In some embodiments, the engine ECU 48 is arranged to receive the data processed by the at least one sensor ECU 52, e.g. the measure of the concentration of the non-hydrocarbon impurity(ies) in the biogas.

It is noted that the double-headed arrow labelled by reference numeral 56 in FIGs. 2A, 2B, 3A and 3B denotes communication, e.g. a data link, between the at least one sensor ECU 52 and the engine ECU 48. For example, a controller area network, CAN, connection may be provided between the at least one sensor ECU 52 and the engine ECU 48.

For instance, the sensor ECU(s) 52 may analyze the data from the infrared sensor(s) 34 and provide the analyzed data, e.g. the measure of the concentration of the non-hydrocarbon impurity(ies) in the biogas, to the engine ECU 48 to adjust/correct parameter(s) relevant to the combustion in the combustion engine 12.

In some embodiments, the sensing system, e.g. the sensor ECU(s) 52 thereof, continuously monitors the biogas while the combustion engine 12 is running, or continuously monitors the biogas in the vehicle storage tank assembly 38 irrespective of whether or not the combustion engine 12 is running.

In embodiments in which the control system 46 controls the user communication system 20, based on the measure of the concentration of the non-hydrocarbon impurity(ies) in the biogas, to communicate the information relevant to the at least one non-hydrocarbon impurity in the biogas, the user communication system 20 may be thus controlled using the at least one sensor ECU 52.

For example, the sensor ECU(s) 52 may provide the above-mentioned analyzed data, e.g. the measure of the concentration of the non-hydrocarbon impurity(ies) in the biogas, to the user communication system 20, e.g. driver HMI. This can involve, for instance, controlling the user communication system 20, based on the measure, to communicate that the biogas composition is within a safe specification or whether there is any problem detected associated with the composition of the biogas.

It is noted that the double-headed arrow labelled by reference numeral 58 in FIGs. 2A, 2B, 3A and 3B denotes communication, e.g. a data link, between the control system 46, e.g. the at least one sensor ECU 52 thereof, with the user communication system 20. For example, a controller area network, CAN, connection may be provided between the user communication system 20 and the control system 46, e.g. the at least one sensor ECU 52 thereof.

In embodiments, such as shown in FIGs. 2A and 2B, in which the infrared sensor(s) 34 comprise(s) the delivery system infrared sensor(s) 34A, the at least one sensor ECU 52 may include a delivery system sensor ECU 52A.

The delivery system sensor ECU 52A may be arranged, e.g. together with the delivery system infrared sensor(s) 34A, on the inside 40 of the vehicle 10, for example on the inside 40 of the body of the vehicle 10.

In embodiments in which the vehicle sensing and control assembly is included in the vehicle 10, the infrared sensor(s) 34 can be arranged upstream of the combustion engine 12 to enable the combustion engine 12, e.g. via the engine ECU 48, and/or the user communication system 20 to be controlled in response to the non-hydrocarbon impurity(ies) reaching a trigger level (e.g. the above-mentioned given threshold and/or the above-mentioned given limit). Combustion parameter(s) of the combustion engine 12 may be controlled, for example, based on the trigger level/given threshold being reached.

In embodiments, such as shown in FIGs. 3A and 3B, in which the infrared sensor(s) 34 comprise(s) the fueling infrared sensor(s) 34B, the at least one sensor ECU 52 may include at least one fueling sensor ECU 52B, 52C.

Thus, one or more of the sensor ECU(s) 52, together with the fueling infrared sensor(s) 34B, may be installed in the fueling equipment used for delivering the biogas into the vehicle storage tank assembly 38, in other words in a fuel supply system. This may benefit from reducing cost associated with one infrared sensor 34 and one sensor ECU 52 for each vehicle 10 and/or may be more acceptable than aftermarket installation, in other words retrofitting, of the vehicle sensing and control assembly in a vehicle 10.

It is noted that the infrared sensor(s) 34 and sensor ECU(s) 52 included in the fuel equipment may have limitations in terms of being unable to provide a basis for continuous adjustment of the combustion engine's 12 configuration, e.g. calibration, while the combustion engine 12 is running. However, the latter may be permitted by the delivery system infrared sensor(s) 34A, e.g. together with the delivery system sensor ECU 52A.

In some embodiments, the at least one fueling sensor ECU 52B, 52C includes an exterior fueling sensor ECU 52B arranged, e.g. together with the fueling infrared sensor(s) 34B, on the outside 44 of the vehicle 10, for example on the outside 44 of the body of the vehicle 10.

In some embodiments, the fueling infrared sensor(s) 34B and the fueling sensor ECU(s) 52C, 52B, e.g. at least the exterior fueling sensor ECU 52B thereof, is/are included in the fueling equipment used for delivering the biogas into the vehicle storage tank assembly 38.

In more general terms, the vehicle sensing and control assembly can be included in a fueling assembly that further comprises the fueling equipment used for delivering the biogas into the vehicle storage tank assembly 38. In other embodiments, the vehicle sensing and control assembly can be included in the vehicle 10. In further embodiments, the vehicle sensing and control assembly is included in, e.g. distributed between, the fueling equipment and the vehicle 10.

In some embodiments, such as shown in FIGs. 2A, 2B, 3A and 3B, the at least one sensor ECU 52 includes an interior sensor ECU 52A, 52C arranged on the inside 40 of the vehicle 10, for example on the inside 40 of the body of the vehicle 10.

In embodiments, such as shown in FIGs. 3A and 3B, in which the at least one sensor ECU 52 comprises the exterior fueling sensor ECU 52B and the interior sensor ECU 52C, the exterior fueling sensor ECU 52B and the interior sensor ECU 52C may be connected with each other, for example via a data link 60, e.g. a controller area network, CAN, connection, provided therebetween.

In such embodiments, during a vehicle fueling operation, the exterior fueling sensor ECU 52B can determine the biogas composition, e.g. the measure of the concentration of the non-hydrocarbon impurity(ies) in the biogas, from data provided by the fueling infrared sensor(s) 34B, and can communicate this to the interior sensor ECU 52C.

The interior sensor ECU 52C can then, for example, send processed data comprising the measure of the concentration of the non-hydrocarbon impurity(ies) in the biogas to the engine ECU 48 for combustion calibration and/or can control the user communication system 20 to communicate, based on the measure, the information relevant to the at least one non-hydrocarbon impurity in the biogas to the user of the vehicle 10.

In such embodiments, controlling of the combustion engine 12 via the engine ECU 48 to calibrate combustion and/or controlling of the communication system 20 to communicate the information may, for example, be implemented just once, prior to starting a fueling operation in which biogas is supplied by the fueling equipment into the vehicle storage tank assembly 38.

In some embodiments, the at least one infrared sensor 34 is configured to analyze the biogas using near infrared radiation, having a wavelength between 785 nm and 2500 nm (12738 cm⁻¹ to 4,000cm⁻¹), and/or mid infrared radiation, having a wavelength between 2501 nm to 15000 nm (3999 cm⁻¹ to 667cm⁻¹). Such near infrared and mid infrared wavelengths have been found to be particularly suitable for analyzing non-hydrocarbon impurity(ies) present in biogas, such as H₂O, CO₂, H₂S, siloxane(s), NH₃, nitrogen oxides, N₂, and halogen-comprising species.

The infrared range may, in general terms, be adapted to account for specifics of the detection. For example, spectroscopic bands for methane, water and CO₂ may be observed in the near infrared region.

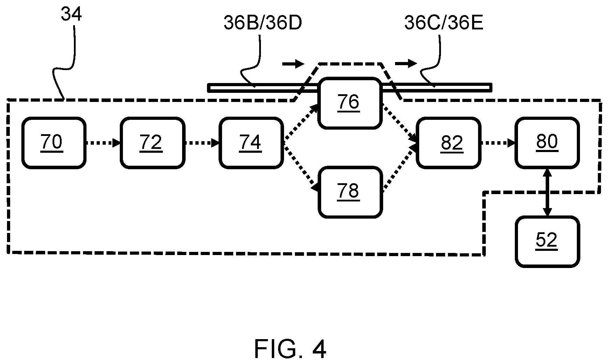

The at least one infrared sensor 34 can be configured in any suitable manner. In some embodiments, such as shown in FIG. 4, the, e.g. each of the, infrared sensor(s) 34 include an infrared radiation source 70 comprising a laser diode.

Infrared radiation generated by the radiation source 70, e.g. laser diode, may be directed to a monochromator 72 arranged to select the wavelength(s) employed to analyze the biogas, e.g. the above-mentioned near infrared and/or mid infrared wavelengths.

The dashed arrows in FIG. 4 denote paths taken by the infrared radiation.

In some embodiments, such as shown in FIG. 4, the infrared radiation is directed, e.g. from the monochromator 72, to a beam splitter 74 arranged to split the infrared radiation into a first beam directed through a sample cell 76 and a second beam directed through a reference cell 78. The first and second beams may then both be directed towards a detector 80 via a splitter 82 arranged to alternate which of the first and second beams is directed to the detector 80. Comparison between the signal generated by the detector 80 for the first beam with the signal generated by the detector 80 for the second beam can allow correction for certain variables, e.g. relating to the infrared sensor 34 itself.

Analyzing a reference sample, e.g. in the reference cell 78, may enable the sensing system to be periodically calibrated and can assist to reduce deviations.

The detector 80, e.g. a charge coupled device, CCD, detector 80 may be connected to the control system 46. In some embodiments, such as shown in FIG. 4, the detector 80, e.g. CCD detector 80, is connected to the at least one sensor ECU 52.

It is generally noted that pressure and temperature sensors (not visible in FIG. 4) may be installed with the infrared sensor(s) 34, e.g. the spectroscopic infrared sensor(s) 34.

It is reiterated that the sensing system may spectroscopically determine, using infrared spectroscopy, the measure of the concentration of the at least one non-hydrocarbon impurity in the biogas, e.g. with the sensing system using the near infrared radiation, the mid infrared radiation, or both.

In such embodiments, the composition of the biogas can be detected based on transmittance and/or absorbance of different gases included in the biogas, with methane being the major component of the biogas.

It is noted that the methane content of biogas typically ranges from 45% to 75% by volume, with most of the remainder being CO₂.

In some embodiments, the sensing system is configured to spectroscopically determine, using Fourier transform infrared spectroscopy, FT-IR, the measure of the concentration of the at least one non-hydrocarbon impurity in the biogas.

In such embodiments, a Fourier transform of the signal generated by the detector 80 may be generated by the sensing system and/or the control system 46, e.g. by the sensor ECU(s) 52 of the sensing system and/or the control system 46. This may provide a transmittance or absorbance spectrum or internal table for analysis.

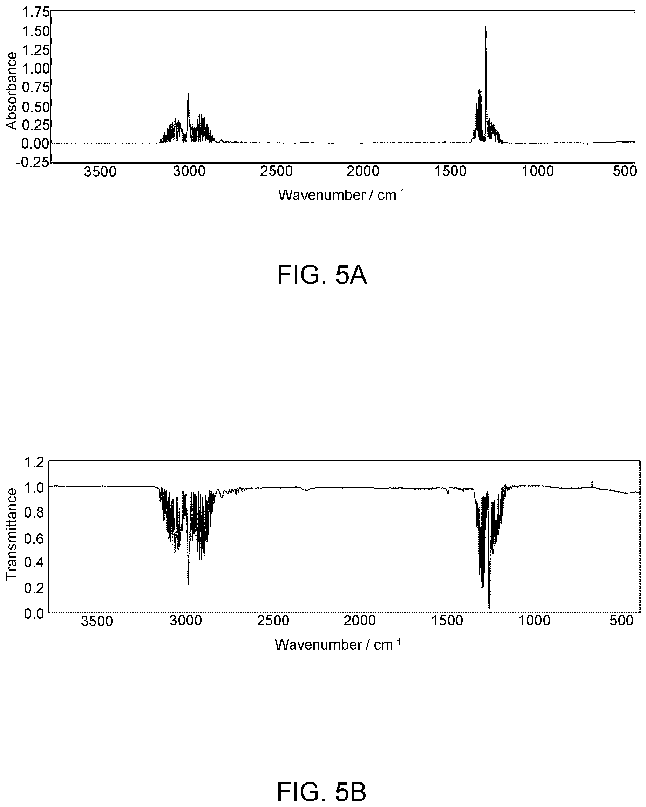

The graphic nature of spectroscopy, with specific absorption and transmittance bands for each chemical component of a mixture can permit an experienced user to analyze the spectrum and detect each component and its quantity, by the frequencies and intensities of the bands present in the spectrum. For reference, a FT-IR (mid infrared) spectrum, absorbance vs. wavenumber, of methane is shown in FIG. 5A, while a FT-IR (mid infrared) spectrum, transmittance vs. wavenumber, of methane is shown in FIG. 5B.

Artificial intelligence (AI) algorithms may effectively perform such pattern recognition, similarly to an experienced user. Al techniques, such as YOLO (You Only Look Once), may be used to detect the components, e.g. methane, water, nitrogen oxides, ammonia, CO₂, hydrogen sulfide, halogen-comprising species and/or siloxane(s). A set of samples can be used to train such an Al algorithm. Such an Al algorithm can, in effect "see" the spectrum and detect the presence of the impurity(ies) and methane, and their concentrations.

Convolutional neural networks may, for example, be trained to classify the results and detect the composition of the biogas, including analyzing proportions and quantities of components of the biogas.

Other techniques for analyzing the data provided by the infrared sensor(s) 34 can also be contemplated, such as identifying a "fingerprint" of a component of the biogas in the infrared spectrum, and using the intensity of the peaks constituting the "fingerprint" to detect its proportion in the biogas, and thus its quantity.

It is noted that gas chromatography may be employed in development of the infrared spectroscopy method, since gas chromatography can be used to independently establish the concentration of various non-hydrocarbon impurities in biogas, e.g. using ASTM D 1945 (2019), ASTM D 6228-11, ABNT NBR 16560 (01/2017), ABNT NBR 16561 (2017-01-09), or ABNT NBR 16562 (2017-01-09), depending on the impurity(ies) of interest.

Such standard methods may also be used to define threshold concentration(s) of one or more of the non-hydrocarbon impurities that is/are equivalent to the above-mentioned given limit or given threshold.

Detection and quantification of non-hydrocarbon impurity(ies), e.g. main contaminant(s), in biogas can accordingly be implemented using infrared spectroscopy, such as near and/or mid infrared spectroscopy, e.g. near and/or mid Fourier transform infrared spectroscopy.

Analysis of the spectrum/spectra resulting from such spectroscopic techniques using, for example, artificial intelligence algorithm(s), can provide the measure of the concentration of the non-hydrocarbon impurity(ies), e.g. main contaminant(s), in the biogas.

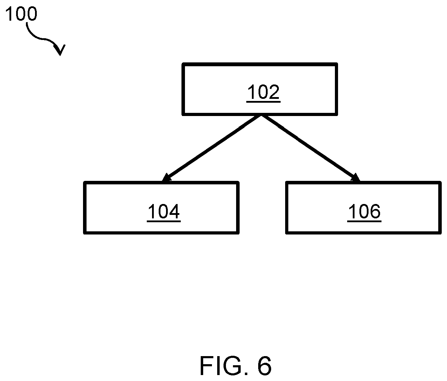

Referring now to FIG. 6, the present disclosure further provides a method 100 of operating a vehicle 10 that comprises a combustion engine 12 configured to enable biogas to be used as fuel for the combustion engine 12. The vehicle 10 may be a vehicle 10 according to any of the embodiments described herein.

The method 100 comprises determining 102, using a sensing system comprising at least one infrared sensor 34, a measure of a concentration of at least one non-hydrocarbon impurity in the biogas using data from the at least one infrared sensor 34; and one or both of the following: controlling 104 a user communication system 20, based on said measure, to communicate information relevant to the at least one non-hydrocarbon impurity in the biogas to a user of the vehicle 10; and generating 106, based on said measure, one or more control signals for adjusting a configuration of the combustion engine 12.

The method 100 may be implemented by the control system 46, e.g. the sensor ECU(s) 52 and/or the engine ECU 48, configured as described in relation to any of the embodiments provided herein.

Further provided is a computer program comprising computer program code which is configured, when the computer program is run on a control system 46, to cause the control system 46 to implement the method 100 according to any of the embodiments described herein.

Within this disclosure it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

Any reference signs in the claims should not be construed as limiting the scope.

All references cited herein are incorporated herein in their entireties. If there is a conflict between definitions herein and in an incorporated reference, the definition herein shall control.

## Claims

1. A vehicle sensing and control assembly for a vehicle (10), which vehicle has a combustion engine (12) configured to enable biogas to be used as fuel for the combustion engine, the vehicle sensing and control assembly comprising:
a sensing system comprising at least one infrared sensor (34), the sensing system being configured to determine, using data from the at least one infrared sensor, a measure of a concentration of at least one non-hydrocarbon impurity in the biogas; and
a control system (46) configured to:
control a user communication system (20), based on said measure, to communicate information relevant to the at least one non-hydrocarbon impurity in the biogas to a user of the vehicle; and/or
generate, based on said measure, one or more control signals for adjusting a configuration of the combustion engine.

2. The vehicle sensing and control assembly according to claim 1, wherein the at least one infrared sensor (34) comprises:
at least one delivery system infrared sensor (34A) for analyzing biogas between a vehicle storage tank assembly (38) of the vehicle (10) and the combustion engine (12); and/or
at least one fueling infrared sensor (34B) for analyzing biogas being delivered into the vehicle storage tank assembly.

3. The vehicle sensing and control assembly according to claim 1 or claim 2, wherein the control system (46) is configured to generate the one or more control signals for adjusting the configuration of the combustion engine (12) based on the measure reaching or exceeding a given threshold.

4. The vehicle sensing and control assembly according to claim 3, wherein the control system (46) is configured so that the one or more control signals adjust the configuration of the combustion engine (12), based on the measure reaching or exceeding the given threshold, to limit power output of the combustion engine.

5. The vehicle sensing and control assembly according to claim 3 or claim 4, wherein the control system (46) is configured to cause, based on the measure reaching or exceeding the given threshold, the vehicle to be operated in a limp mode, which limp mode comprises a maximum number of revolutions per minute of the combustion engine (12) being limited compared to when the vehicle is not being operated in the limp mode.

6. The vehicle sensing and control assembly according to any one of claims 1 to 5, wherein the control system (46) is configured to control the user communication system (20) to issue a notification or warning to the user based on the measure reaching or exceeding a given limit; wherein the control system (46) is optionally configured to control the user communication system (20) to notify the user that power output of the combustion engine (12) being limited is due, at least in part, to excessive concentration of the at least one non-hydrocarbon impurity in the biogas.

7. The vehicle sensing and control assembly according to any one of claims 3 to 6, wherein, for CO₂ as one of the at least one non-hydrocarbon impurity, the given threshold or the given limit for CO₂ is equivalent to a CO₂ concentration threshold in the range of 2.5 to 4.5 mol%.

8. The vehicle sensing and control assembly according to any one of claims 3 to 7, wherein, for H₂S as one of the at least one non-hydrocarbon impurity, the given threshold or the given limit for H₂S is equivalent to a H₂S concentration threshold in the range of 5 to 20 mg/m³.

9. The vehicle sensing and control assembly according to any one of claims 3 to 8, wherein, for siloxane(s) as one of the at least one non-hydrocarbon impurity, the given threshold or the given limit for siloxane(s) is equivalent to a siloxane(s) concentration threshold in the range of 0.10 to 0.50 mg Si/m³.

10. The vehicle sensing and control assembly according to any one of claims 3 to 9, wherein, for chlorinated compound(s) as one of the at least one non-hydrocarbon impurity, the given threshold or the given limit for chlorinated compound(s) is equivalent to a chlorinated compound(s) concentration threshold in the range of 2 to 10 mg Cl/m³; and/or wherein, for fluorinated compound(s) as one of the at least one non-hydrocarbon impurity, the given threshold or the given limit for fluorinated compound(s) is equivalent to a fluorinated compound(s) concentration threshold in the range of 2 to 10 mg F/m³.

11. The vehicle sensing and control assembly according to any one of claims 1 to 10, wherein the at least one infrared sensor (34) is configured to analyze the biogas using near infrared radiation, having a wavelength between 785 nm and 2500 nm, and/or mid infrared radiation, having a wavelength between 2501 nm to 15000 nm.

12. The vehicle sensing and control assembly according to any one of claims 1 to 11, wherein the at least one non-hydrocarbon impurity comprises one or more selected from H₂O, CO₂, H₂S, siloxane(s), NH₃, nitrogen oxides, N₂, and halogen-comprising species.

13. A vehicle (10) comprising:
a combustion engine (12) configured to enable biogas to be used as fuel for the combustion engine; and
the vehicle sensing and control assembly according to any one of claims 1 to 12.

14. The vehicle (10) according to claim 13, wherein one or more of the at least one infrared sensor (34) is/are arranged upstream of the combustion engine (12) to analyze biogas to be, and/or being, supplied to the combustion engine.

15. A method (100) of operating a vehicle (10) that comprises a combustion engine (12) configured to enable biogas to be used as fuel for the combustion engine, the method comprising:
determining (102), using a sensing system comprising at least one infrared sensor (34), a measure of a concentration of at least one non-hydrocarbon impurity in the biogas using data from the at least one infrared sensor; and one or both of the following:
controlling (104) a user communication system (20), based on said measure, to communicate information relevant to the at least one non-hydrocarbon impurity in the biogas to a user of the vehicle; and
generating (106), based on said measure, one or more control signals for adjusting a configuration of the combustion engine.
